# EUROPEAN PATENT APPLICATION

(11) **EP 4 738 684 A1**
(43) Date of publication of application: **06.05.2026**
(21) Application number: 25184264.7
(22) Date of filing: 20.06.2025
(51) Int. Cl.: H02P 3/18, H02P 3/22

(54) **DRIVE DEVICE FOR DRIVING MOTOR AND OPERATING METHOD THEREOF**

(30) Priority: 04.11.2024 TW 113142163
(71) Applicant: APh ePower Co., Ltd., Kaohsiung City 821 (TW)
(72) Inventor: CHEN, Jyh-Wei, 821 Kaohsiung City (TW); SU, Hsiu-Hsien, 821 Kaohsiung City (TW); TZENG, Yun-Chi, 821 Kaohsiung City (TW)
(74) Representative: Becker, Eberhard

(57) **Abstract**

Provided are a drive device (100, 200, 300) for driving a motor and an operating method for the drive device (100, 200, 300). The drive device (100, 200, 300) includes a battery module (110), a conversion circuit (120), an energy storage circuit (130, 230, 330), and a control switch (140). The conversion circuit (120) is coupled to the motor, and the battery module (110). The control switch (140) is coupled in series with the energy storage circuit (130, 230, 330) between a first power terminal (T1) and a second power terminal (T2) of the battery module (110). When a voltage value (V1) at the first power terminal (T1) is higher than a first setting voltage value (VS1), the drive device (100) turns on the control switch (140) to enable the energy storage circuit (130, 230, 330) to store electrical energy at the first power terminal (T1).

## Description

### BACKGROUND

### Technical Field

The disclosure relates to a drive device and an operating method for the drive device, and particularly relates to a drive device for driving a motor and an operating method for the drive device.

### Related Art

The drive device includes a battery module and a conversion circuit. The conversion circuit may provide electrical energy stored in the battery module to the motor. The motor is driven according to the electrical energy. When the motor decelerates or brakes, the motor provides a back electromotive force. The conversion circuit recovers the electrical energy of the back electromotive force to the battery module. It should be noted that when the electrical energy of the back electromotive force is too large, the battery module may not be able to withstand the voltage value of the back electromotive force and may be damaged. Similarly, the power switch of the conversion circuit may not be able to withstand the voltage value of the back electromotive force and may be damaged. Therefore, when the motor decelerates or brakes, how to protect the drive device to extend the service life of the drive device is one of the research focuses of persons skilled in the art.

### SUMMARY

The disclosure provides a drive device for driving a motor and an operating method for the drive device, which can reduce the risk of damage to the drive device from the electrical energy from the motor.

In an embodiment of the disclosure, the drive device of the disclosure is for driving a motor. The drive device includes a battery module, a conversion circuit, an energy storage circuit, and a control switch. The conversion circuit is coupled to the motor, a first power terminal of the battery module, and a second power terminal of the battery module. The control switch is coupled in series with the energy storage circuit between the first power terminal and the second power terminal. When a voltage value at the first power terminal is higher than a first setting voltage value, the drive device turns on the control switch to enable the energy storage circuit to store electrical energy at the first power terminal.

In an embodiment of the disclosure, the operating method is for a drive device. The drive device is for driving a motor. The drive device includes a battery module, a conversion circuit, an energy storage circuit, and a control switch. The conversion circuit is coupled to the motor, a first power terminal of the battery module, and a second power terminal of the battery module. The control switch is coupled in series with the energy storage circuit between the first power terminal and the second power terminal. The operating method includes the following. A voltage value is received at the first power terminal. Also, when the voltage value at the first power terminal is higher than a first setting voltage value, the control switch is turned on to enable the energy storage circuit to store electrical energy at the first power terminal.

Based on the above, when the voltage value at the first power terminal is higher than a first setting voltage value, the drive device turns on the control switch to enable the energy storage circuit to store the electrical energy at the first power terminal. Therefore, when the voltage value at the first power terminal is too high, the energy storage circuit stores the electrical energy at the first power terminal to reduce the risk of damage to the drive device from the electrical energy at the first power terminal. In this way, the service life of the drive device can be extended.

### BRIEF DESCRIPTION OF THE DRAWINGS

FIG. 1 is a schematic diagram of a drive device according to an embodiment of the disclosure.
FIG. 2 is a schematic diagram of a drive device according to an embodiment of the disclosure.
FIG. 3 is a schematic diagram of a drive device according to an embodiment of the disclosure.
FIG. 4 is a flowchart of an operating method according to an embodiment of the disclosure.

### DESCRIPTION OF THE EMBODIMENTS

Some embodiments of the disclosure will be described in detail with reference to the accompanying drawings. In the following description, when the same reference numerals appear in different drawings, the reference numerals will be regarded as the same or similar elements. These embodiments are merely a part of the disclosure and do not disclose all possible implementations of the disclosure. More precisely, these embodiments are merely examples within the scope of the appended claims of the disclosure.

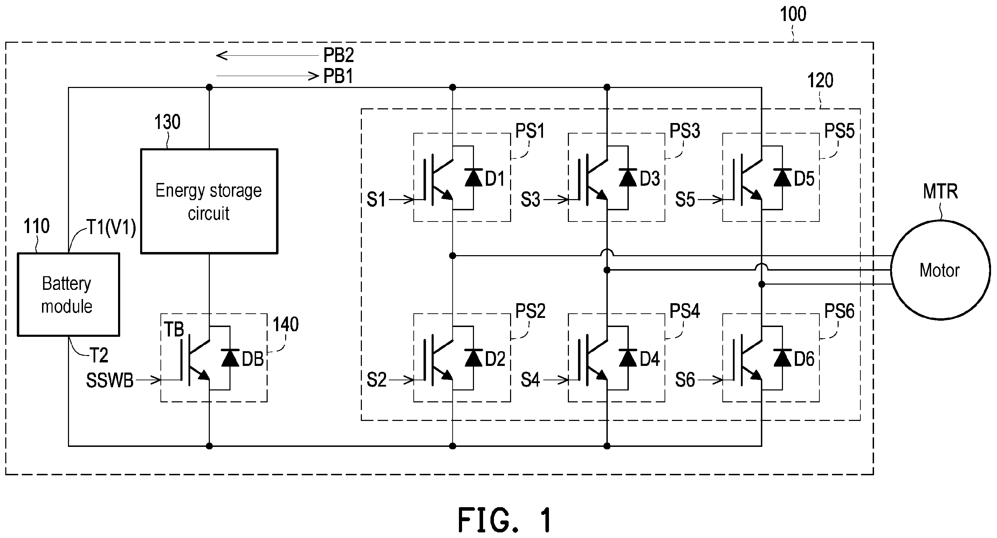

Please refer to FIG. 1, which is a schematic diagram of a drive device according to an embodiment of the disclosure. In this embodiment, a drive device 100 is for driving a motor MTR. The drive device 100 includes a battery module 110, a conversion circuit 120, an energy storage circuit 130, and a control switch 140. The conversion circuit 120 is coupled to the motor MTR, a first power terminal T1 of the battery module 110, and a second power terminal T2 of the battery module 110. In this embodiment, the conversion circuit 120 may use battery power PB1 from the battery module 110 to drive the motor MTR. For example, when the motor MTR needs to be driven, the conversion circuit 120 acts as a multi-phase power inverter. The conversion circuit 120 converts the DC battery power from the battery module 110 into AC drive power, and provides the AC drive power to the motor MTR.

The control switch 140 is coupled in series with the energy storage circuit 130 between the first power terminal T1 and the second power terminal T2. In this embodiment, a first terminal of the energy storage circuit 130 is coupled to the first power terminal T1. The control switch 140 is coupled between a second terminal of the energy storage circuit 130 and the second power terminal T2. In some embodiments, a first terminal of the control switch 140 is coupled to the first power terminal T1. The energy storage circuit 130 is coupled between a second terminal of the control switch 140 and the second power terminal T2.

In this embodiment, when the voltage value V1 at the first power terminal T1 is higher than a first setting voltage value, the drive device 100 turns on the control switch 140 to enable the energy storage circuit 130 to store electrical energy at the first power terminal T1. When the motor MTR decelerates or brakes, the motor MTR provides a back electromotive force. When the motor MTR decelerates or brakes, the conversion circuit 120 acts as a rectifier that may convert the back electromotive force energy from the motor MTR into battery power PB2. Therefore, a voltage value V1 at the first power terminal T1 rises. The conversion circuit 120 may use the battery power PB2 to charge the battery module 110. The drive device 100 receives the voltage value V1 at the first power terminal T1. When the voltage value V1 at the first power terminal T1 is higher than the first setting voltage value, it is indicated that the voltage value V1 at the first power terminal T1 is too high. Therefore, the drive device 100 turns on the control switch 140 to enable the energy storage circuit 130 and the conversion circuit 120 to form a charging circuit for the energy storage circuit 130. The energy storage circuit 130 is able to store electrical energy at the first power terminal T1.

It is worth mentioning that when the voltage value V1 at the first power terminal T1 is too high, the energy storage circuit 130 stores the electrical energy at the first power terminal T1 to reduce the risk of damage to the drive device 100 from the electrical energy at the first power terminal T1. In this way, the service life of the drive device 100 can be extended. In addition, the energy storage circuit 130 also recovers the electrical energy at the first power terminal T1. The energy storage circuit 130 can achieve an energy-saving effect.

In this embodiment, the conversion circuit 120 includes power switches PS1 to PS6. The power switch PS1 has a diode D1. A first terminal of the power switch PS1 is coupled to the first power terminal T1. A second terminal of the power switch PS1 is coupled to the motor MTR. A control terminal of the power switch PS1 receives a switch signal S1. The power switch PS2 has a diode D2. A first terminal of the power switch PS2 is coupled to the second terminal of the power switch PS1. A second terminal of the power switch PS2 is coupled to the second power terminal T2. A control terminal of the power switch PS2 receives a switch signal S2.

In addition, the cathode of the diode D1 is coupled to the first terminal of the power switch PS1. The anode of the diode D1 is coupled to the second terminal of the power switch PS1. The cathode of the diode D2 is coupled to the first terminal of the power switch PS2. The anode of the diode D2 is coupled to the second terminal of the power switch PS2. In this embodiment, the power switches PS1, PS2 form a first bridge arm of the conversion circuit 120.

The power switch PS3 has a diode D3. A first terminal of the power switch PS3 is coupled to the first power terminal T1. A second terminal of the power switch PS3 is coupled to the motor MTR. A control terminal of the power switch PS3 receives a switch signal S3. The power switch PS4 has a diode D4. A first terminal of the power switch PS4 is coupled to the second terminal of the power switch PS3. A second terminal of the power switch PS4 is coupled to the second power terminal T2. A control terminal of the power switch PS4 receives a switch signal S4.

In addition, the cathode of the diode D3 is coupled to the first terminal of the power switch PS3. The anode of the diode D3 is coupled to the second terminal of the power switch PS3. The cathode of the diode D4 is coupled to the first terminal of the power switch PS4. The anode of the diode D4 is coupled to the second terminal of the power switch PS4. In this embodiment, the power switches PS3, PS4 form a second bridge arm of the conversion circuit 120.

The power switch PS5 has a diode D5. A first terminal of the power switch PS5 is coupled to the first power terminal T1. A second terminal of the power switch PS5 is coupled to the motor MTR. A control terminal of the power switch PS5 receives a switch signal S5. The power switch PS6 has a diode D6. A first terminal of the power switch PS6 is coupled to the second terminal of the power switch PS5. A second terminal of the power switch PS6 is coupled to the second power terminal T2. A control terminal of the power switch PS6 receives a switch signal S6.

In addition, the cathode of the diode D5 is coupled to the first terminal of the power switch PS5. The anode of the diode D5 is coupled to the second terminal of the power switch PS5. The cathode of the diode D6 is coupled to the first terminal of the power switch PS6. The anode of the diode D6 is coupled to the second terminal of the power switch PS6. In this embodiment, the power switches PS5, PS6 form a third bridge arm of the conversion circuit 120.

In this embodiment, the motor MTR may be a motor of an elevator system, but the disclosure is not limited thereto. The first setting voltage value may be set to, for example, 340 to 350 volt, but the disclosure is not limited thereto. In this embodiment, the battery module 110 may be implemented by an aluminum-ion battery, but the disclosure is not limited thereto.

In this embodiment, the power switches PS1 to PS6 may each be implemented by at least one insulated gate bipolar transistor (IGBT) or at least one field effect transistor (FET) of any form.

In this embodiment, the control switch 140 includes a transistor TB and a diode DB. A first terminal of the transistor TB is coupled to a first terminal of the control switch 140. A second terminal of the transistor TB is coupled to a second terminal of the control switch 140. A control terminal of the transistor TB receives a switch signal SSWB. A cathode of the diode DB is coupled to the first terminal of the control switch 140. An anode of the diode DB is coupled to the second terminal of the control switch 140. The disclosure is not limited to the form of the control switch 140 in this embodiment. The control switch 140 may be implemented by a relay, an IGBT, or a FET of any form.

In this embodiment, when the voltage value V1 at the first power terminal T1 is lower than or equal to the first setting voltage value, the drive device 100 turns off the control switch 140.

In addition, in this embodiment, when the control switch 140 is turned on, if the voltage value of the energy storage circuit 230 is lower than the voltage value V1 at the first power terminal T1, the battery module 110 may charge the energy storage circuit 230.

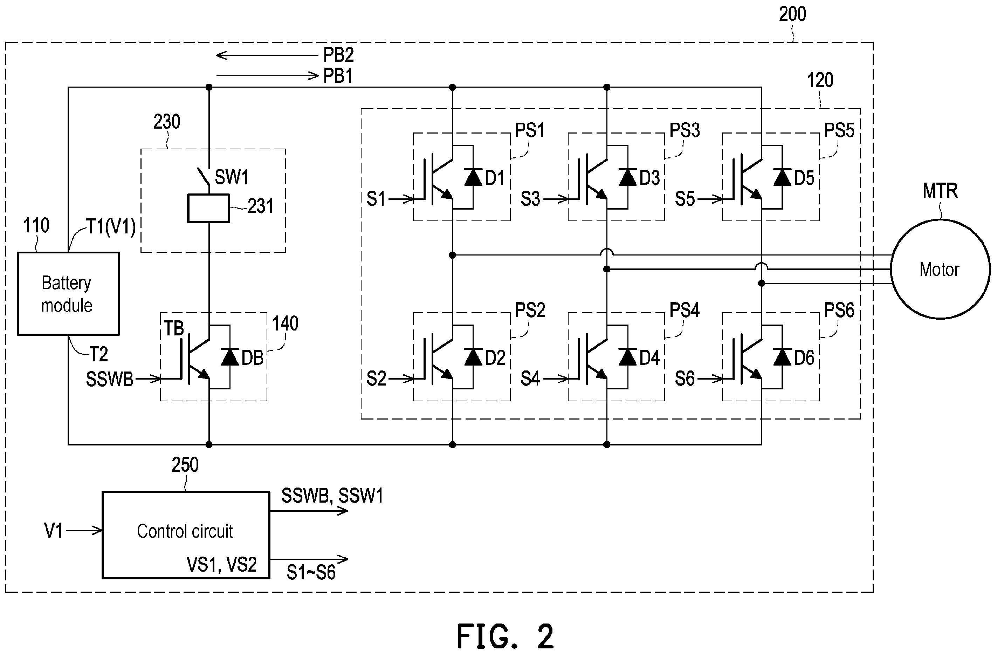

Please refer to FIG. 2, which is a schematic diagram of the drive device according to an embodiment of the disclosure. In this embodiment, a drive device 200 includes a battery module 110, a conversion circuit 120, an energy storage circuit 230, a control switch 140, and a control circuit 250. The coupling manners of the battery module 110, the conversion circuit 120, and the control switch 140 have been clearly described in the embodiment of FIG. 1, so details will not be repeated here.

In this embodiment, the energy storage circuit 230 includes a switch SW1 and an energy storage battery 231. A first terminal of the switch SW1 is coupled to the first power terminal T1. The energy storage battery 231 is coupled between a second terminal of the switch SW1 and the control switch 140. When the voltage value V1 at the first power terminal T1 is higher than the first setting voltage value VS1, the drive device 200 turns on the control switch 140 and the switch SW1.

Furthermore, the control circuit 250 receives the voltage value V1 at the first power terminal T1. When the voltage value V1 at the first power terminal T1 is higher than the first setting voltage value VS1, the control circuit 250 turns on the control switch 140 and the switch SW1. For example, the control circuit 250 is coupled to the first power terminal T1, the control terminal of the switch SW1, and the control terminal of the control switch 140. The control circuit 250 may control the control switch 140 using the switch signal SSWB, and control the switch SW1 using the switch signal SSW1.

In addition, the control circuit 250 may further control the switch control operations of the power switches PS1 to PS6 of the conversion circuit 120.

In this embodiment, when the voltage value V1 at the first power terminal T1 is lower than or equal to the first setting voltage value VS1, the drive device 200 may use the control circuit 250 to turn off the control switch 140 and the switch SW1.

In this embodiment, the switch SW1 may be implemented by any form of transistor switch or relay.

In addition, during the period when the control switch 140 and the switch SW1 are turned off, when the voltage value V1 at the first power terminal T1 is lower than a reference voltage of the battery module 110, it is indicated that the electrical energy of the battery module 110 is insufficient. In the above situation, when the voltage value of the energy storage battery 231 is greater than the voltage value V1 at the first power terminal T1, the drive device 200 may use the control circuit 250 to turn on the switch SW1. Therefore, the energy storage battery 231 may charge the battery module 110. In the above situation, when the voltage value of the energy storage battery 231 is greater than the voltage value V1 at the first power terminal T1, the drive device 200 may turn on the switch SW1 and the control switch 140.

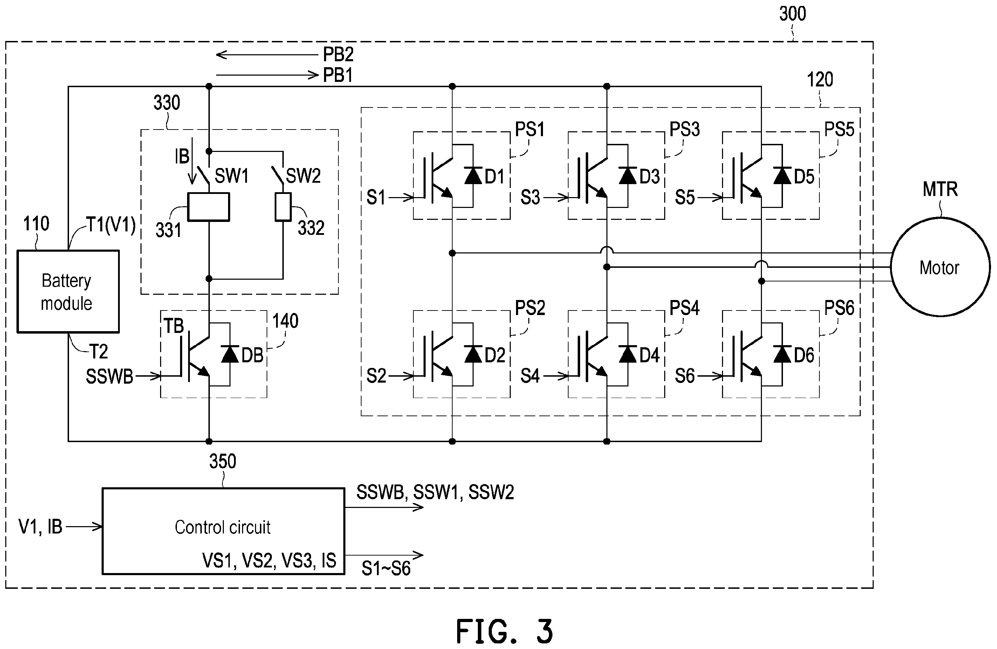

Please refer to FIG. 3, which is a schematic diagram of the drive device according to an embodiment of the disclosure. In this embodiment, a drive device 300 includes a battery module 110, a conversion circuit 120, an energy storage circuit 330, a control switch 140, and a control circuit 350. The coupling manners of the battery module 110, the conversion circuit 120, and the control switch 140 have been clearly described in the embodiment of FIG. 1, so details will not be repeated here.

In this embodiment, the energy storage circuit 330 includes switches SW1, SW2, an energy storage battery 331, and a resistor 332. The first terminal of the switch SW1 is coupled to the first power terminal T1. The energy storage battery 231 is coupled between the second terminal of the switch SW1 and the control switch 140. The first terminal of the switch SW2 is coupled to the first power terminal T1. The resistor 332 is coupled between the second terminal of the switch SW2 and the control switch 140.

In this embodiment, a second setting voltage value VS2 higher than the first setting voltage value VS1 is set. When the voltage value V1 at the first power terminal T1 is higher than the first setting voltage value VS1, the drive device 300 turns on the control switch 140 and the switch SW1, and turns off the switch SW2. When the voltage value V1 at the first power terminal T1 is higher than the second setting voltage value VS2, the drive device 300 turns on the control switch 140 and the switches SW1, SW2. For example, the first setting voltage value VS1 is 340 volts. The second setting voltage value VS2 is 360 volts.

In this embodiment, when the voltage value V1 at the first power terminal T1 is higher than the second setting voltage value VS2 and a current value of a charging current IB flowing through the energy storage battery 331 is higher than a setting current value IS, it is indicated that the current value of the charging current IB is too high. The drive device 300 turns on the control switch 140 and the switches SW1, SW2. Therefore, the resistor 332 provides a current shunt path, thereby reducing the current value of the charging current IB flowing through the energy storage battery 331.

During the period when the control switch 140 and the switches SW1, SW2 are turned on, when a time duration that the current value of the charging current IB flowing through the energy storage battery 331 is higher than the setting current value IS is greater than a setting time duration, it is indicated that even though the resistor 332 provides the current shunt path, the current value of the charging current IB is still too high. Therefore, the drive device 300 turns on the control switch 140 and the switch SW2, and turns off the switch SW1. As a result, the conversion circuit 120 does not charge the energy storage battery 331, and uses the resistor 332 to absorb the electrical energy.

In addition, a third setting voltage value VS3 higher than the second setting voltage value VS2 is set. During the period when the control switch 140 and the switches SW1, SW2 are turned on, when the voltage value V1 at the first power terminal T1 is higher than the third setting voltage value VS3, the voltage value V1 at the first power terminal T1 continues to rise to be higher than the third setting voltage value VS3. Therefore, the drive device 300 turns on the control switch 140 and the switch SW2, and turns off the switch SW1. As a result, the conversion circuit 120 does not charge the energy storage battery 331, and uses the resistor 332 to absorb the electrical energy. In this embodiment, the third setting voltage value VS3 may be the maximum withstand voltage value of the energy storage battery 331 and/or the battery module 110. For example, the third setting voltage value VS3 is 380 to 400 volts.

In this embodiment, the control circuit 350 may receive the voltage value V1 at the first power terminal T1 and the current value of the charging current IB flowing through the energy storage battery 331. The control circuit 350 may perform switch control operations of the control switch 140 and the switches SW1, SW2 according to the voltage value V1 at the first power terminal T1 and the current value of the charging current IB flowing through the energy storage battery 331. For example, the control circuit 350 is coupled to the first power terminal T1 and the energy storage circuit 330. The control circuit 250 may use the switch signal SSWB to control the control switch 140, use the switch signal SSW1 to control the switch SW1, and use the switch signal SSW2 to control the switch SW2.

In addition, the control circuit 350 may further control the switch control operations of the power switches PS1 to PS6 of the conversion circuit 120.

In this embodiment, the switches SW1, SW2 may be implemented by any form of transistor switch or relay.

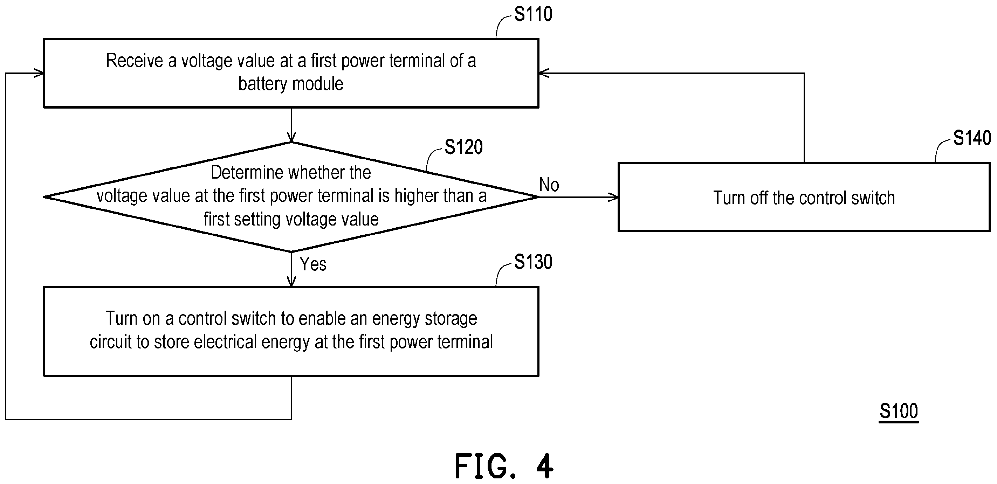

Please refer to FIG.1 and FIG.4. FIG.4 is a flowchart of an operating method according to an embodiment of the disclosure. In this embodiment, an operating method S100 is applicable to the drive device 100. The operating method S100 includes Steps S110 to S140. In Step S110, the drive device 100 receives the voltage value V1 at the first power terminal T1 of the battery module 110. In Step S120, the drive device 100 determines whether the voltage value V1 at the first power terminal T1 is higher than a first setting voltage value. When the voltage value V1 at the first power terminal T1 is higher than the first setting voltage value, the drive device 100 turns on the control switch 140 in Step S130 to enable the energy storage circuit 130 to store the electrical energy at the first power terminal T1. Next, the drive device 100 returns to Step S110.

On the other hand, when the voltage value V1 at the first power terminal T1 is lower than or equal to the first setting voltage value, the drive device 100 turns off the control switch 140 in Step S140. Next, the drive device 100 returns to Step S110.

The implementation details of Steps S110 to S140 have been clearly described in the embodiments of FIG.1 to FIG.3, so details will not be repeated here.

Referring to FIG.2, FIG.3, and FIG.4, in some embodiments, the operating method S100 further includes performing switch control operations of the control switch 140 and the switches SW1, SW2 according to the voltage value V1 at the first power terminal T1 and the current value of the charging current IB flowing through the energy storage battery 331.

In summary, the drive device includes a battery module, a conversion circuit, an energy storage circuit, and a control switch. The conversion circuit is coupled to the motor, a first power terminal of the battery module, and a second power terminal of the battery module. The control switch is coupled in series with the energy storage circuit between the first power terminal and the second power terminal. When a voltage value at the first power terminal is higher than a first setting voltage value, the drive device turns on the control switch to enable the energy storage circuit to store electrical energy at the first power terminal. When the voltage value at the first power terminal is too high, the energy storage circuit stores the electrical energy at the first power terminal to reduce the risk of damage to the drive device from the electrical energy at the first power terminal. In this way, the service life of the drive device can be extended.

Although the disclosure has been disclosed in the embodiments as above, the embodiments are not intended to limit the disclosure. Persons skilled in the art may make some changes and modifications without departing from the scope of the disclosure. Therefore, the protection scope of the disclosure shall be defined by the appended claims.

## Claims

1. A drive device (100, 200, 300) for driving a motor, comprising:
a battery module (110);
a conversion circuit (120) coupled to the motor, a first power terminal (T1) of the battery module (110), and a second power terminal (T2) of the battery module (110);
an energy storage circuit (130, 230, 330); and
a control switch (140) coupled in series with the energy storage circuit (130, 230, 330) between the first power terminal (T1) and the second power terminal (T2),
wherein in response to the voltage value (V1) at the first power terminal (T1) being higher than a first setting voltage value (VS1), the drive device (100, 200, 300) turns on the control switch (140) to enable the energy storage circuit (130, 230, 330) to store electrical energy at the first power terminal (T1).

2. The drive device (200, 300) as claimed in claim 1, wherein the energy storage circuit (230, 330) comprises:
a first switch (SW1), wherein a first terminal of the first switch (SW1) is coupled to the first power terminal (T1); and
an energy storage battery (231, 331) coupled between a second terminal of the first switch (SW1) and the control switch (140).

3. The drive device (200, 300) as claimed in claim 2, wherein in response to the voltage value (V1) at the first power terminal (T1) being higher than the first setting voltage value (VS1), the drive device (100, 200, 300) turns on the control switch (140) and the first switch (SW1).

4. The drive device (300) as claimed in claim 2, wherein the energy storage circuit (330) further comprising:
a second switch (SW2), wherein a first terminal of the second switch (SW2) is coupled to the first power terminal (T1); and
a resistor (332) coupled between a second terminal of the second switch (SW2) and the control switch (140).

5. The drive device (300) as claimed in claim 4, wherein
in response to the voltage value (V1) at the first power terminal (T1) being higher than a second setting voltage value (VS2), the drive device (100, 200, 300) turns on the control switch (140), the first switch (SW1), and the second switch (SW2), and
the second setting voltage value (VS1) is higher than the first setting voltage value (VS1).

6. The drive device (300) as claimed in claim 5, wherein in response to the voltage value (V1) at the first power terminal (T1) being higher than the second setting voltage value (VS2) and a current value of a charging current (IB) flowing through the energy storage battery (331) being higher than a setting current value (IS), the drive device (100, 200, 300) turns on the control switch (140), the first switch (SW1), and the second switch (SW2).

7. The drive device (100, 200, 300) as claimed in claim 5, wherein during a period when the control switch (140), the first switch (SW1), and the second switch (SW2) are turned on, in response to a time duration that a current value of a charging current (IB) flowing through the energy storage battery (331) is higher than a setting current value (IS) being greater than a setting time duration, the drive device (100, 200, 300) turns on the control switch (140) and the second switch (SW2), and turns off the first switch (SW1).

8. The drive device (100, 200, 300) as claimed in claim 5, wherein
during a period when the control switch (140), the first switch (SW1), and the second switch (SW2) are turned on, in response to the voltage value (V1) at the first power terminal (T1) being higher than a third setting voltage value (VS3), the drive device (100, 200, 300) turns on the control switch (140) and the second switch (SW2), and turns off the first switch (SW1), and
the third setting voltage value (VS3) is higher than the second setting voltage value (VS2).

9. An operating method (S100) for a drive device (100, 200, 300), wherein the drive device (100, 200, 300) is for driving a motor, the drive device (100, 200, 300) comprises a battery module (110), a conversion circuit (120), an energy storage circuit (130, 230, 330), and a control switch (140), the conversion circuit (120) is coupled to the motor, a first power terminal (T1) of the battery module (110), and a second power terminal (T2) of the battery module (110), the control switch (140) is coupled in series with the energy storage circuit (130, 230, 330) between the first power terminal (T1) and the second power terminal (T2), and the operating method (S100) comprises:
receiving a voltage value (V1) at the first power terminal (T1); and
in response to the voltage value (V1) at the first power terminal (T1) being higher than a first setting voltage value (VS1), turning on the control switch (140) to enable the energy storage circuit (130, 230, 330) to store electrical energy at the first power terminal (T1).

10. The operating method (S100) as claimed in claim 9, wherein the energy storage circuit (130, 230, 330) comprises:
a first switch (SW1), wherein a first terminal of the first switch (SW1) is coupled to the first power terminal (T1); and
an energy storage battery (231, 331) coupled between a second terminal of the first switch (SW1) and the control switch (140).

11. The operating method (S100) as claimed in claim 10, further comprising:
in response to the voltage value (V1) at the first power terminal (T1) being higher than the first setting voltage value (VS1), turning on the control switch (140) and the first switch (SW1).

12. The operating method (S100) as claimed in claim 10, wherein the energy storage circuit (130, 230, 330) further comprises:
a second switch (SW2), wherein a first terminal of the second switch (SW2) is coupled to the first power terminal (T1); and
a resistor (332) coupled between a second terminal of the second switch (SW2) and the control switch (140).

13. The operating method (S100) as claimed in claim 12, further comprising:
in response to the voltage value (V1) at the first power terminal (T1) being higher than a second setting voltage value (VS2), turning on the control switch (140), the first switch (SW1), and the second switch (SW2), wherein
the second setting voltage value (VS2) is higher than the first setting voltage value (VS1).

14. The operating method (S100) as claimed in claim 13, further comprising:
in response to the voltage value (VS1) at the first power terminal (T1) being higher than the second setting voltage value (VS2) and a current value of a charging current (IB) flowing through the energy storage battery (331) being higher than a setting current value (IS), turning on the control switch (140), the first switch (SW1), and the second switch (SW2).

15. The operating method (S100) as claimed in claim 13, further comprising:
during a period when the control switch (140), the first switch (SW1), and the second switch (SW2) are turned on, in response to a time duration that a current value of a charging current (IB) flowing through the energy storage battery (331) is higher than a setting current value (IS) being greater than a setting time duration, turning on the control switch (140) and the second switch (SW2), and turning off the first switch (SW1).
